# EUROPÄISCHE PATENTSCHRIFT

(11) **EP 1 565 305 B1**
(45) Veröffentlichungstag und Bekanntmachung des Hinweises auf die Patenterteilung: **12.07.2006**
(21) Anmeldenummer: 03812136.4
(22) Anmeldetag: 27.09.2003
(51) Int. Cl.: B29C 65/02, B65B 7/28, B65B 51/22

(54) **VORRICHTUNG ZUM EINSIEGELN EINES DECKELELEMENTS IN EINEN MANTELTEIL EINES VERPACKUNGSKÖRPERS AUS VERBUNDMATERIAL**
DEVICE FOR SEALING A COVER ELEMENT INTO A CASING PART OF A PACKAGING BODY MADE OF COMPOSITE MATERIAL
DISPOSITIF PERMETTANT DE SOUDER UN ELEMENT DE RECOUVREMENT DANS LA PARTIE LATERALE D'UN CORPS D'EMBALLAGE CONSTITUE D'UN MATERIAU COMPOSITE

(30) Priorität: 29.11.2002 DE 10255726; 25.06.2003 DE 10328411
(43) Veröffentlichungstag der Anmeldung: 24.08.2005
(73) Patentinhaber: SIG Technology Ltd., 8212 Neuhausen am Rheinfall (CH)
(72) Erfinder: AUER, Dirk, 40670 Meerbusch (DE)
(74) Vertreter: Thielmann, Andreas
(86) Internationale Anmeldenummer: PCT/EP2003/010783
(87) Internationale Veröffentlichungsnummer: WO 2004/050333

(56) Entgegenhaltungen:
- WO-A-00/66438
- DE-A- 4 014 774
- US-A- 4 996 826

## Beschreibung

Die vorliegende Erfindung betrifft eine Vorrichtung zum Einsiegeln eines Deckelelements in einen Mantelteil eines Verpackungskörpers aus Verbundmaterial.

Aus der DE 40 14 774 A1 ist eine Vorrichtung zur Herstellung eines Verpackungskörpers aus Verbundmaterial bekannt, wobei der Verpackungskörper einen Mantelteil und zwei an den Stirnseiten eingesetzte Deckelelemente aufweist. Das Verbundmaterial umfasst ein kunststoffbeschichtetes Papier sowie eine Aluminiumschicht oder eine Schicht aus einem anderen elektrisch leitenden Material.

Ein derartiger Verpackungskörper wird mit der dort beschriebenen Vorrichtung in der Weise hergestellt, dass zunächst der Mantelteil gebildet wird, indem die gegenüberliegenden Kanten eines Bogens aus Verbundmaterial miteinander mittels einer Siegelnaht verbunden werden. Bei der Herstellung des Mantelteils ist die Wahl der Querschnittsform beliebig. Es kann sich im einfachsten Fall um einen rechteckigen oder kreisförmigen Querschnitt handeln, es sind aber auch andere Querschnittsformen denkbar.

In die Stirnenden des Mantelteils werden Deckelelemente eingesetzt, während der Mantelteil von einem Dorn gehalten wird, dessen Querschnitt dem des Mantelteils entspricht. Die Deckelelemente weisen bereits eine Randzarge auf, die parallel zur Wandung des Mantelteils verläuft. Nach dem Einsetzen des Deckelelements wird der Endbereich des Mantelteils um die Randzarge herumgebogen.

Zusätzlich wird der Endbereich des Mantelteils mittels Heißluft aufgeheizt und durch ein anschließendes Verpressen des bereits herumgebogenen Bereiches kommt es zur Bildung einer Siegelnaht an den Stirnenden, so dass das Deckelelement in die Stirnenden des Mantelteils eingesiegelt ist.

Nachteilig an einer derartigen Vorrichtung ist, dass es zur Bildung der Siegelnaht an den Stirnenden nach dem Herumbiegen mehrerer Schritte bedarf. Zunächst muss der Endbereich des Mantelteils mittels Heißluft aufgeheizt werden und dann erst kann das Verpressen erfolgen. Damit verbunden ist eine vergleichsweise komplizierte Vorrichtung. Durch das Aufheizen mit Heißluft besteht ferner die Gefahr einer Beschädigung des Verbundmaterials durch Überhitzung. Außerdem können unterschiedliche Querschnittsformen für den Mantelteil nur nach aufwendigen Umbauten bearbeitet werden, da nicht nur der Dorn sondern auch die gesamte Presseinrichtung verändert werden müssen.

Ausgehend von diesem Stand der Technik liegt der vorliegenden Erfindung die Aufgabe zugrunde, eine Vorrichtung zum Einsiegeln eines Deckelelements in einen Mantelteil eines Verpackungskörpers aus Verbundmaterial bereitzustellen, wobei der Siegelvorgang in möglichst wenigen Schritten erfolgen soll und wobei die Vorrichtung einfach an unterschiedliche Querschnittsformen des Mantelteils angepasst werden kann.

Erfindungsgemäß wird diese Aufgabe dadurch gelöst, dass ein Induktorring vorgesehen ist, dass der Induktorring den Mantelteil umgibt und an den Verlauf des Umfangs des Mantelteils angepasst ist, dass der Induktorring wenigstens zwei Segmente umfasst, die einen Ring bilden, dass die Segmente in der Ebene des Deckelelements so verschiebbar sind, dass die von den Segmenten umschlossene Querschnittsfläche veränderbar ist, dass ein erster Stoß zwischen zwei Segmenten elektrisch ausgebildet ist, so dass an dem ersten Stoß kein elektrischer Kontakt zwischen den benachbarten Segmenten besteht, und dass die weiteren Stöße so ausgebildet sind, dass unabhängig von der relativen Position der Segmente zueinander ein elektrischer Kontakt zwischen benachbarten Segmenten besteht.

Erfindungsgemäß können mit dem Induktorring, der mit einem Hochfrequenzfeld beaufschlagt werden kann, in dem Verbundmaterial im Bereich der Siegelnaht Wirbelströme in der Aluminiumschicht bzw. einer Schicht aus anderem leitenden Material induziert werden, was zu einer Erwärmung führt. Die gleichzeitige Verschiebbarkeit der Segmente ermöglicht, dass der Induktorring von einer geöffneten in eine geschlossene Stellung durch Verschieben der Segmente überführt werden kann. Bei dem Überführen in die geschlossenen Stellung kann während des Aufheizens ein Verpressen des Deckelelements mit dem Mantelteil stattfinden.

Damit das Hochfrequenzfeld den Induktorring unabhängig von seiner Stellung vollständig durchsetzt, ist es erforderlich, dass der Stoß zwischen den Segmenten, an die das Hochfrequenzfeld angelegt ist, isolierend ausgebildet ist. Die weiteren Stöße zwischen den übrigen Segmenten müssen dann elektrisch leitend ausgebildet sein.

Nach einer weiteren Lehre der Erfindung sind Gleitstücke vorgesehen, die über Kolben mit einer auf den Mantelteil gerichteten Kraft beaufschlagt werden können. Die Segmente können dann an den Gleitstücken befestigt werden, was das Austauschen der Segmente erleichtert, wenn sich die Querschnittsform des Mantelteils ändert. Sind vier Segmente vorgesehen, die entlang rechtwinklig zueinander angeordneter Linien verschiebbar sind, wird ein symmetrisches Anpressen ermöglicht.

In einer weiteren bevorzugten Ausführungsform sind vier symmetrisch angeordnete mit Druck beaufschlagbare Kolben vorgesehen, die ein gleichmäßiges Beaufschlagen der Gleitstücke mit einer auf den Mantelteil gerichteten Kraft ermöglichen. Werden die Kolben über eine gemeinsame Leitung mit Druck beaufschlagt, wird ein besonders einfaches Einstellen eines über den Verlauf der Siegelnaht konstanten Drucks ermöglicht.

Vorzugsweise sind die Gleitstücke in einer von dem Mantelteil wegweisenden Richtung vorgespannt, so dass sich die Segmente selbstständig von dem Mantelteil weg bewegen, wenn die Kolben nicht mehr mit Druck beaufschlagt werden.

Für die Kraftübertragung von den Kolben auf die Gleitstücke werden bevorzugt Hebelarme eingesetzt, was zunächst eine kompakte Bauweise der Vorrichtung ermöglicht. Sind jeweils zwei Hebelarme an einem Gleitstück angelenkt, ist eine zuverlässige Kraftübertragung gewährleistet. Wenn jeweils ein Kolben gegen die zweiten Enden zweier Hebelarme drückt und diese zwei Hebelarme an zwei unterschiedlichen Gleitstücken angelenkt sind, ist gewährleistet, dass sämtliche Gleitstücke und damit sämtliche Segmente gleichmäßig mit einer Kraft beaufschlagt werden.

In weiterer Ausgestaltung der Erfindung ist an dem ersten Stoß unabhängig von der Position der Segmente ein Abstand zwischen den dazu benachbarten Segmenten vorhanden. Dadurch ist eine zuverlässige Isolierung sichergestellt. Insbesondere hat möglicherweise in Folge der Bewegung der Segmente entstehender Abrieb keine Beeinträchtigung der Isolation zur Folge.

Wenn die Segmente gemäß einer bevorzugten Ausführungsform aus einer Vielzahl von übereinander angeordneten Lamellen gebildet werden, ergibt sich die Möglichkeit einer Vielzahl von Kontaktflächen an den weiteren Stößen, wobei dann, wenn diese als nach außen weisende Laschen ausgebildet sind, ein besonders guter Kontakt sichergestellt ist mit einem möglichst geringen Widerstand. Dieser ist dann auch unabhängig von der Stellung der Segmente relativ zueinander.

Die vorliegende Erfindung wird nachfolgend anhand eines Ausführungsbeispiels näher beschrieben, das eine bevorzugte Ausführungsform einer erfindungsgemäßen Vorrichtung darstellt. In der Zeichnung zeigen:
- Fig. 1: die Vorrichtung im Querschnitt von der Seite,
- Fig. 2: die Vorrichtung im Horizontalschnitt entlang der Linie II-II aus Fig. 1,
- Fig. 3: die Vorrichtung im Horizontalschnitt entlang der Linie III-III aus Fig. 1,
- Fig. 4: den Induktorring in der geöffneten Stellung in Draufsicht,
- Fig. 5: den Induktorring in der geschlossenen Stellung in Draufsicht,
- Fig. 6: einen Teil des geöffneten Induktorrings im Schnitt entlang der Linie VI-VI aus Fig. 4,
- Fig. 7: einen Teil des geöffneten Induktorrings im Schnitt entlang der Linie VII-VII aus Fig. 4,
- Fig. 8: einen Teil des geschlossenen Induktorrings entlang der Linie VIII-VIII aus Fig. 5 und
- Fig. 9: einen Teil des geschlossenen Induktorrings im Schnitt entlang der Linie IX-IX aus Fig. 5.

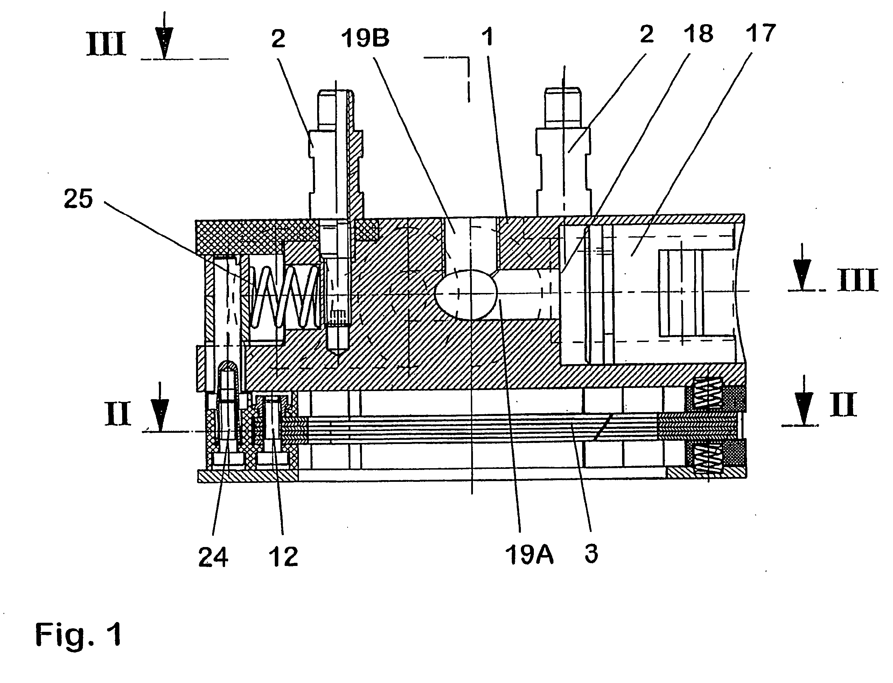

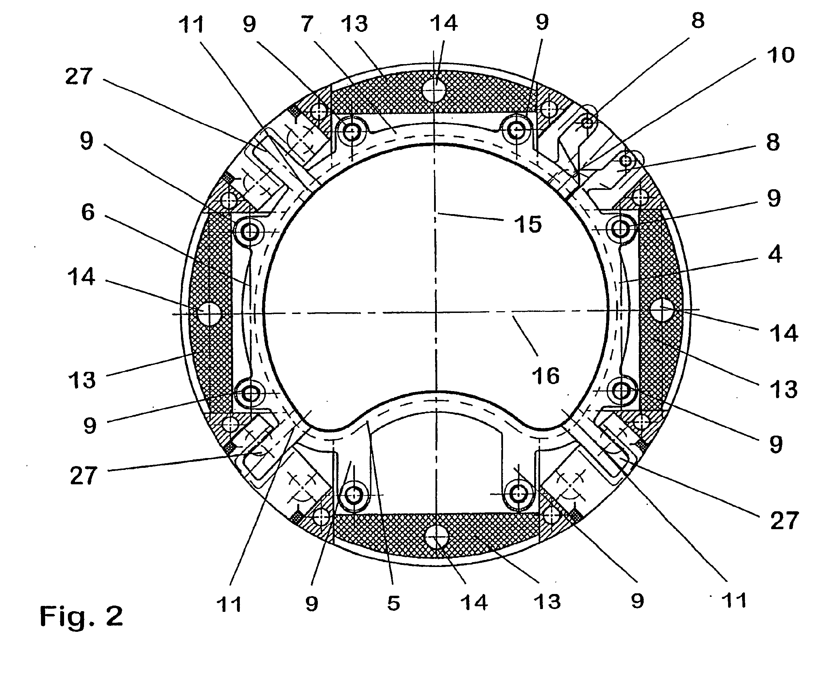

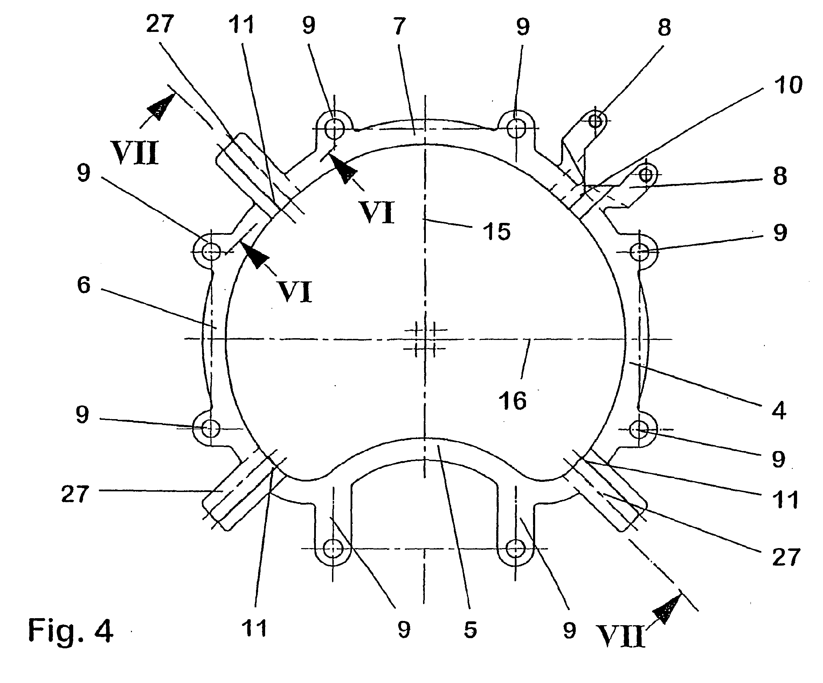

Wie in Fig. 1 und 2 dargestellt, weist die Vorrichtung einen Halter 1 auf, der einen kreisförmigen Querschnitt hat. Auf der Oberseite des Halters 1 sind Zapfen 2 angebracht, die dazu dienen, die Vorrichtung an einer Aufhängung zu befestigen. Am unteren Teil des Halters 1 ist der Induktorring 3 angebracht, der aus vier Segmenten 4, 5, 6, 7 besteht (Fig. 2 und 4). Die Segmente 4, 5, 6, 7 können die Querschnittsfläche eines nicht dargestellten Mantelteils umschließen. Der Verlauf der nach innen weisenden Kanten der Segmente 4, 5, 6, 7 ist an den Verlauf des Umfangs des Mantelteils angepasst. Dabei wird in die Stirnseite des Mantelteils das Deckelelement so eingesetzt, dass sich die Randzarge des Deckelelements auf der Höhe des Induktorrings 3 befindet. Der Induktorring 3 befindet sich somit in der Ebene des Deckelelements.

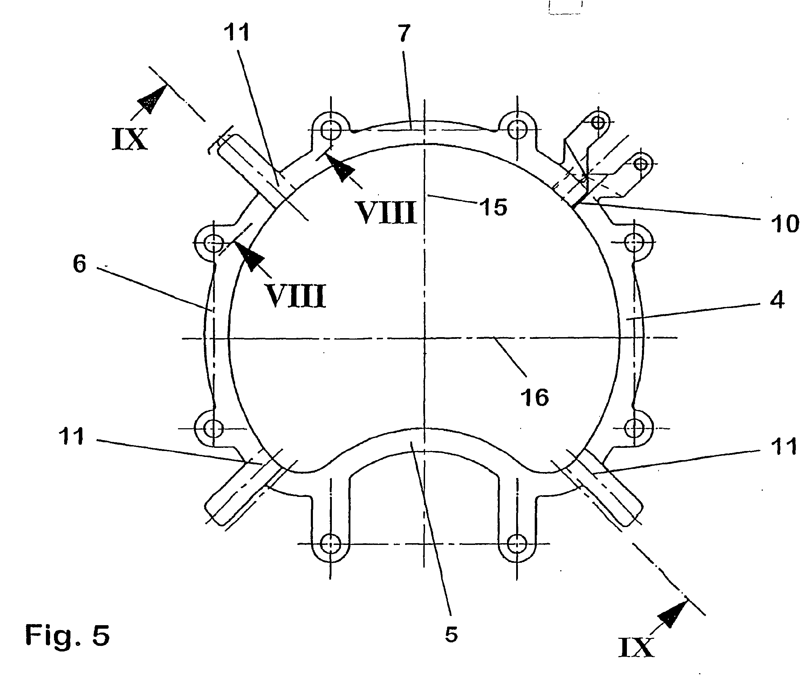

Die Segmente 4, 5, 6, 7 sind verschiebbar in dem Halter 1 angebracht, so dass die von ihnen umschlossene Querschnittsfläche veränderbar ist. Die Segmente 4, 5, 6, 7 können dabei von einer geöffneten Stellung (Fig. 4) in eine geschlossene Stellung (Fig. 5) überführt werden, wobei die umschlossene Querschnittsfläche in der geschlossenen Stellung geringer ist.

Zwischen den Segmenten 4 und 7 gibt es einen ersten Stoß 10, der elektrisch isolierend ausgebildet ist. Die weiteren Stöße 11 zwischen den übrigen Segmenten sind dagegen elektrisch leitend ausgebildet. An den Segmenten 4 und 7, die an den ersten Stoß 10 angrenzen, sind Kontaktelemente 8 vorgesehen, an die ein Hochfrequenzfeld angelegt werden kann. Damit das Hochfrequenzfeld den gesamten Induktorring 3 durchsetzen kann, ist es erforderlich, dass der erste Stoß 10 isolierend und die weiteren Stöße 11 elektrisch leitend ausgebildet sind.

Die Segmente 4, 5, 6, 7 weisen außerdem Befestigungslaschen 9 auf, mit denen die Segmente 4, 5, 6, 7 über Stifte 12 an Gleitstücken 13 befestigt sind. Die Gleitstücke 13 weisen Bohrungen 14 auf und sind verschiebbar im unteren Teil des Halters 1 angebracht. Dabei können die vier Gleitstücke 13 entlang einer ersten Linie 15 und einer zweiten Linie 16 verschoben werden, wobei die erste Linie 15 und die zweite Linie 16 einen Winkel von etwa 90° einschließen und in der Ebene des Deckelelements liegen.

Oberhalb des Induktorrings 3 sind vier Kolben 17 in dem Halter 1 vorgesehen, die in vier Zylindern 18 geführt sind. Die vier Zylinder 18 sind so angeordnet, dass die Kolben 17 entlang von vier Linien verschiebbar sind, die sich kreuzförmig vom Zentrum des Halters 1 aus rechtwinklig zueinander erstrecken. Die Zylinder 18 weisen an ihrer zur Mitte des Halters 1 gewandten Bodenfläche jeweils eine Druckleitung 19A auf, die in die gemeinsame im Zentrum des Halters 1 angeordnete und nach oben weisende Druckleitung 19B münden.

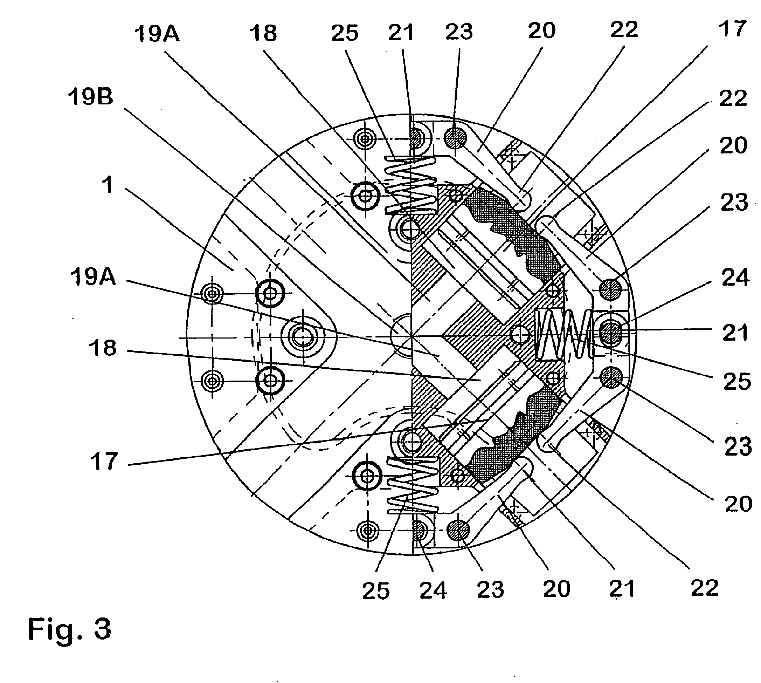

Wie der Fig. 3 entnommen werden kann, sind im oberen Teil des Halters 1 acht Hebelarme 20 angeordnet. Die Hebelarme 20 weisen ein erstes Ende 21 und ein zweites Ende 22 auf und sind um Schwenkachsen 23 schwenkbar. Dabei verlaufen die Schwenkachsen 23 senkrecht zur Ebene des Deckelelements. Die Kolben 17 drücken mit ihrem vom Zentrum des Halters 1 weg weisenden Ende gegen die zweiten Enden 22 der Hebelarme 20. Dabei drückt jeweils ein Kolben 17 gegen zwei zweite Enden 22 von zwei unterschiedlichen Hebelarmen 20. Die ersten Enden 21 der Hebelarme 20 sind über Achsen 24 an den Gleitstücken 13 angelenkt, wobei die Achsen 24 durch die Bohrungen 14 in den Gleitstücken 13 verlaufen. Jeweils zwei Hebelarme 20 sind mit ihren ersten Enden 21 an einem Gleitstück 13 durch eine gemeinsame Achse 24 angelenkt, wobei die zweiten Enden 22 dieser Hebelarme von zwei unterschiedlichen Kolben 17 mit Druck beaufschlagt werden können. Durch diese Verbindung zwischen zwei Kolben 17 und einem Gleitstück 13 und umgekehrt wird der Druck gleichmäßig auf die Segmente 4, 5, 6, 7 übertragen, wodurch ein konstanter Anpressdruck entlang der Siegelnaht erreicht wird.

Ferner sind Federn 25 vorgesehen, durch die die ersten Enden 21 der Hebelarme 20 in von dem Mantelteil weg weisender Richtung vorgespannt sind. Dadurch sind auch die Gleitstücke 12 in dieser Richtung vorgespannt.

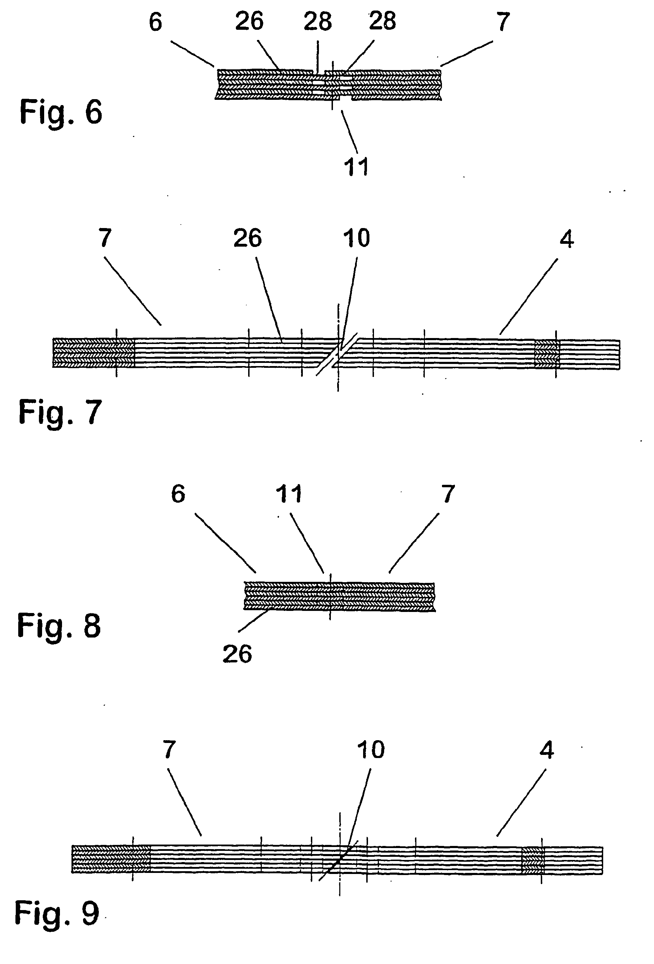

Wie aus den Fig. 6 bis 9 hervorgeht, sind die Segmente 4, 5, 6, 7 aus übereinander angeordneten Lamellen 26 zusammengesetzt. Dabei ist der erste Stoß 10 so ausgebildet, dass sowohl im geöffneten Zustand des Induktorrings 3 (Fig. 7) als auch im geschlossenen Zustand (Fig. 9) ein Abstand zwischen den an den ersten Stoß 10 angrenzenden und damit benachbarten Segmenten 4 und 7 gegeben ist. Durch diesen ständig bestehenden Abstand ist sichergestellt, dass der erste Stoß 10 zwischen den Segmenten 4 und 7 unabhängig von der Stellung des Induktorrings 3 elektrisch isolierend ausgebildet ist und dass das an die Kontaktelemente 8 angelegte Hochfrequenzfeld den Induktorring 3 vollständig durchsetzen kann.

An den weiteren Stößen 11 sind Laschen 27 an den Lamellen 26 ausgebildet, die von dem Mantelteil in der Ebene des Deckelelements nach außen weisen (Fig. 4 und 5). Diese Laschen 27 haben Kontaktflächen 28, die sowohl im geöffneten Zustand des Induktorrings 3 (Fig. 6) als auch im geschlossenen Zustand (Fig. 8) aufeinander aufliegen. Damit ist an den weiteren Stößen 11 unabhängig von der Position der Segmente 4, 5, 6, 7 relativ zueinander ständig ein elektrischer Kontakt gegeben.

Zum Einsiegeln eines Deckelelements in einen Mantelteil eines Verpackungskörpers wird zunächst das Deckelelement mit der Randzarge auf einen Formdorn gesetzt. Danach wird der Mantelteil um den Dorn geformt und die Längsnaht hergestellt. Dieser vorgefertigte Verpackungskörper wird der erfindungsgemäßen Vorrichtung zugeführt.

Der Halter 1 mit dem Induktorring 3 an seinem unteren Ende wird dann über das obere Ende des Mantelteils mit dem Deckelelement geschoben. Während des Aufschiebens des Halters 1 mit dem Induktorring 3 werden die Kolben nicht mit Druck beaufschlagt. Aufgrund der Vorspannung durch die Federn 25 werden die Gleitstücke 13 nach außen gedrückt, so dass sich der Induktorring 3 in der in Fig. 4 gezeigten geöffneten Stellung befindet. Nach dem Aufschieben befindet sich die Randzarge des Deckelelements auf der Höhe des Induktorrings 3. Daraufhin werden die Kolben 17 über die Druckleitung 19A und 19B mit Druck beaufschlagt. Dadurch werden die zweiten Enden 22 der Hebelarme 20 nach außen gedrückt. Dies hat zur Folge, dass die Gleitstücke 13 über die ersten Enden 21 der Hebelarme 20 in Richtung des Mantelteils gedrückt werden. Damit bewegen sich die Segmente 4, 5, 6, 7 entlang der ersten Linie 15 und der zweiten Linie 16 aufeinander zu, so dass die von dem Induktorring 3 umschlossene Querschnittsfläche reduziert wird. Der Induktorring 3 wird so in die geschlossene Stellung überführt.

Während die Kolben mit Druck beaufschlagt werden, wird gleichzeitig an die Kontaktelemente 8 der Segmente 4 und 7 ein Hochfrequenzfeld angelegt, wodurch in der Aluminiumschicht innerhalb des Verbundmaterials Wirbelströme induziert werden. Dies führt zu einer Erwärmung der Aluminiumschicht und damit des Verbundmaterials und aufgrund des angewendeten Druckes wird eine Siegelnaht zwischen der Randzarge des Deckelelements und dem Mantelteil gebildet. Somit erfolgt das Aufheizen und Verpressen in einem gemeinsamen Verfahrensschritt. Nach Beendigung des Siegelvorgangs wird das Hochfrequenzfeld abgeschaltet und es werden die Kolben 17 nicht länger mit Druck beaufschlagt. Dadurch, dass die Gleitstücke 12 durch die Federn 25 vorgespannt sind, werden die Gleitstücke 12 durch diese nach außen weg von dem Mantelteil gedrückt und somit der Induktorring 3 in die geöffnete Stellung überführt. Wie den Fig. 4 und 5 zu entnehmen ist, sind der erste Stoß 10 und die weiteren Stöße 11 sowohl in der geschlossenen als auch in der geöffneten Stellung des Induktorrings 3 isolierend bzw. leitend ausgebildet. Dadurch kann während des Schließens des Induktorringes dieser ständig mit einer Hochfrequenz beaufschlagt werden und so das Verbundmaterial aufgeheizt werden, während gleichzeitig das Verpressen stattfindet. Dies ermöglicht eine hohe Qualität der Siegelnaht.

Wie sich insbesondere aus Fig. 2 ergibt, kann die erfindungsgemäße Vorrichtung leicht in der Weise an einen geänderten Querschnitt des Mantelteils angepasst werden. Dazu ist es lediglich notwendig, die Stifte 12 zu entfernen und die Segmente 4, 5, 6, 7 gegen an die geänderte Querschnittsform angepasste neue Segmente auszutauschen. Der verbleibende Teil der Vorrichtung kann dagegen unverändert bleiben.

## Patentansprüche

1. Vorrichtung zum Einsiegeln eines Deckelelements in einen Mantelteil eines Verpackungskörpers aus Verbundmaterial,
**dadurch gekennzeichnet, dass** ein Induktorring (3) vorgesehen ist, dass der Induktoring (3) den Mantelteil umgibt und an den Verlauf des Umfangs des Mantelteils angepasst ist, dass der Induktorring (3) wenigstens zwei Segmente (4, 5, 6, 7) umfasst, die einen Ring bilden, dass die Segmente (4, 5, 6, 7) in der Ebene des Deckelelements so verschiebbar sind, dass die von den Segmenten (4, 5, 6, 7) umschlossene Querschnittsfläche veränderbar ist, dass ein erster Stoß (10) zwischen zwei Segmenten (4, 7) elektrisch isolierend ausgebildet ist, so dass an dem ersten Stoß (10) kein elektrischer Kontakt zwischen den benachbarten Segmenten (4, 7) besteht, und dass die weiteren Stöße (11) so ausgebildet sind, dass unabhängig von der relativen Position der Segmente (4, 5, 6, 7) zueinander ein elektrischer Kontakt zwischen benachbarten Segmenten (4, 5, 6, 7) besteht.

2. Vorrichtung nach Anspruch 1,
**dadurch gekennzeichnet, dass** der Induktorring (3) vier Segmente (4, 5, 6, 7) umfasst.

3. Vorrichtung nach Anspruch 2,
**dadurch gekennzeichnet, dass** zwei Segmente (5, 7) entlang einer ersten Linien (15) gegen den Mantelteil verschiebbar sind und zwei Segmente (4, 6) entlang einer zweiten Linie (16) gegen den Mantelteil verschiebbar sind.

4. Vorrichtung nach Anspruch 3,
**dadurch gekennzeichnet, dass** die erste Linie (15) und die zweite Linie (16) einen Winkel von etwa 90° zueinander einschließen.

5. Vorrichtung nach einem der Ansprüche 1 bis 4,
**dadurch gekennzeichnet, dass** die Vorrichtung Gleitstücke (13) aufweist und dass die Segmente (4, 5, 6, 7) an den Gleitstücken (13) befestigt sind.

6. Vorrichtung nach einem der Ansprüche 1 bis 5,
**dadurch gekennzeichnet, dass** die Vorrichtung Kolben (17) aufweist, die entlang von im Wesentlichen von dem Mantelteil weg weisenden Linien geführt sind.

7. Vorrichtung nach Anspruch 6,
**dadurch gekennzeichnet, dass** vier Kolben (17) vorgesehen sind.

8. Vorrichtung nach Anspruch 7,
**dadurch gekennzeichnet, dass** die Gleitstücke (13) von den Kolben (17) mit einer Kraft beaufschlagbar sind, die in Richtung des Mantelteils weist.

9. Vorrichtung nach einem der Ansprüche 6 bis 8,
**dadurch gekennzeichnet, dass** die Kolben (17) mit Druck beaufschlagbar sind.

10. Vorrichtung nach Anspruch 9,
**dadurch gekennzeichnet, dass** die Kolben (17) über eine gemeinsame Druckleitung (19B) mit Druck beaufschlagbar sind.

11. Vorrichtung nach einem der Ansprüche 5 bis 10,
**dadurch gekennzeichnet, dass** die Gleitstücke (13) in einer von dem Mantelteil weg weisenden Richtung vorgespannt sind.

12. Vorrichtung nach einem der Ansprüche 5 bis 11,
**dadurch gekennzeichnet, dass** die Gleitstücke (13) mittels einer Feder (25) vorgespannt sind.

13. Vorrichtung nach einem der Ansprüche 5 bis 12,
**dadurch gekennzeichnet, dass** die Vorrichtung Hebelarme (20) mit einem ersten Ende (21) und einem zweiten Ende (22) aufweist und dass die ersten Enden (21) an den Gleitstücken (13) angelenkt sind und die Hebelarme (20) um zwischen den Enden (20, 21) vorgesehene Schwenkachsen (23) schwenkbar sind.

14. Vorrichtung nach Anspruch 13,
**dadurch gekennzeichnet, dass** zwei Hebelarme (20) mit ihren ersten Enden (21) an einem Gleitstück (13) angelenkt sind.

15. Vorrichtung nach Anspruch 14,
**dadurch gekennzeichnet, dass** die ersten Enden (21) der Hebelarme (20) mittels einer gemeinsamen Achse (24) an dem Gleitstück (13) angelenkt sind.

16. Vorrichtung nach einem der Ansprüche 13 bis 15,
**dadurch gekennzeichnet, dass** die Kolben (17) gegen die zweiten Enden (22) der Hebelarme (20) drücken.

17. Vorrichtung nach Anspruch 16,
**dadurch gekennzeichnet, dass** ein Kolben (17) gegen die zweiten Enden (22) zweier Hebelarme (20) drückt, und dass die zwei Hebelarme (20) an zwei Gleitstücken (13) angelenkt sind.

18. Vorrichtung nach einem der Ansprüche 13 bis 17,
**dadurch gekennzeichnet, dass** die zweiten Enden (22) der Hebelarme (20) von den Kolben (17) mit einer im Wesentlichen von dem Mantelteil wegweisenden Kraft beaufschlagbar sind.

19. Vorrichtung nach einem der Ansprüche 1 bis 18,
**dadurch gekennzeichnet, dass** die Segmente (4, 7), die benachbart zu dem ersten Stoß (10) angeordnet sind, jeweils ein Kontaktelement (8) aufweisen.

20. Vorrichtung nach einem der Ansprüche 1 bis 19,
**dadurch gekennzeichnet, dass** die an dem ersten Stoß (10) benachbarten Segmente (4, 7) unabhängig von der Position der Segmente (4, 5, 6, 7) einen Abstand zueinander aufweisen.

21. Vorrichtung nach einem der Ansprüche 1 bis 20,
**dadurch gekennzeichnet, dass** die Segmente (4, 5, 6, 7) eine Vielzahl von übereinander angeordneten Lamellen (26) umfassen.

22. Vorrichtung nach Anspruch 21,
**dadurch gekennzeichnet, dass** die Lamellen (26) im Bereich der weiteren Stöße (11) Kontaktflächen (28) aufweisen.

23. Vorrichtung nach Anspruch 22,
**dadurch gekennzeichnet, dass** die Kontaktflächen (28) der Lamellen (26) eines zu einem weiteren Stoß (11) benachbarten Segments (6, 7) auf den Kontaktflächen (28) der Lamellen (26) des anderen zu dem weiteren Stoß (11) benachbarten Segments (6, 7) aufliegen.

24. Vorrichtung nach Anspruch 22 oder 23,
**dadurch gekennzeichnet, dass** die Kontaktflächen (28) als nach außen weisende Laschen (27) an den Lamellen (26) ausgebildet sind.

## Claims

1. A device for sealing a cap element into a casing part of a packaging body made of composite material,
**characterized in that**
an inductor ring (3) is provided, the inductor ring (3) encloses the casing part and is tailored to the shape of the circumference of the casing part, the inductor ring (3) includes at least two segments (4, 5, 6, 7), which form a ring, the segments (4, 5, 6, 7) are displaceable in the plane of the cap element in such a way that the cross-sectional area enclosed by the segments (4, 5, 6, 7) is changeable, a first joint (10) between two segments (4, 7) is implemented as electrically insulating, so that no electrical contact exists between the neighboring segments (4, 7) at the first joint (10), and the further joints (11) are implemented in such a way that, independent of the relative position of the segments (4, 5, 6, 7) to one another, electrical contact exists between neighboring segments (4, 5, 6, 7).

2. The device according to Claim 1,
**characterized in that** the inductor ring (3) includes four segments (4, 5, 6, 7).

3. The device according to Claim 2,
**characterized in that** two segments (5, 7) are displaceable along the first line (15) toward the casing part and two segments (4, 6) are displaceable along a second line (16) toward the casing part.

4. The device according to Claim 3,
**characterized in that** the first line (15) and the second line (16) enclose an angle of approximately 90° to another.

5. The device according to one of Claims 1 through 4,
**characterized in that** the device has sliders (13) and the segments (4, 5, 6, 7) are attached to the sliders (13).

6. The device according to one of Claims 1 through 5,
**characterized in that** the device has pistons (17) which are guided along lines pointing essentially away from the casing part.

7. The device according to Claim 6,
**characterized in that** four pistons (17) are provided.

8. The device according to Claim 7,
**characterized in that** the sliders (13) may have a force which points in the direction of the casing part applied to them by the pistons (17).

9. The device according to one of Claims 6 through 8,
**characterized in that** the pistons (17) may have pressure applied to them.

10. The device according to Claim 9,
**characterized in that** the pistons (17) may have pressure applied to them via a shared pressure line (19B).

11. The device according to one of Claims 5 through 10,
**characterized in that** the sliders (13) are pretensioned in a direction pointing away from the casing part.

12. The device according to one of Claims 5 through 11,
**characterized in that** the sliders (13) are pretensioned using a spring (25).

13. The device according to one of Claims 5 through 12,
**characterized in that** the device has lever arms (20) having a first end (21) and a second end (22), and the first ends are linked to the sliders (13) and the lever arms (20) are pivotable around pivot axes (23) provided between the ends (20, 21).

14. The device according to Claim 13,
**characterized in that** two lever arms (20) with their first ends (21) are linked to one slider (13).

15. The device according to Claim 14,
**characterized in that** the first ends (21) of the lever arms (20) are linked to the slider (13) using a shared axle (24).

16. The device according to one of Claims 13 through 15,
**characterized in that** the pistons (17) press against the second ends (22) of the lever arms (20).

17. The device according to Claim 16,
**characterized in that** one piston (17) presses against the second ends (22) of two lever arms (20), and the two lever arms (20) are linked to two sliders (13).

18. The device according to one of Claims 13 through 17,
**characterized in that** the second ends (22) of the lever arms (20) may have a force pointing essentially away from the casing part applied to them by the piston (17).

19. The device according to one of Claims 1 through 18,
**characterized in that** the segments (4, 7) which are positioned neighboring the first joint (10) each have a contact element (8).

20. The device according to one of Claims 1 through 19,
**characterized in that** the segments (4, 7) neighboring the first joint (10) have a distance to one another, independent of the position of the segments (4, 5, 6, 7).

21. The device according to one of Claims 1 through 20,
**characterized in that** the segments (4, 5, 6, 7) have multiple lamellae (26) which are positioned one over another.

22. The device according to Claim 21,
**characterized in that** the lamellae (26) have contact surfaces (28) in the region of the further joints (11).

23. The device according to Claim 22,
**characterized in that** the contact surfaces (28) of the lamellae (26) of a segment (6, 7) neighboring a further joint (11) rest on the contact surfaces (28) of the lamellae (26) of the other segment (6, 7) neighboring the further joint (11).

24. The device according to Claim 22 or 23,
**characterized in that** the contact surfaces (28) are implemented as brackets (27) pointing outward on the lamellae (26).

## Revendications

1. Dispositif de soudage d'un élément couvercle dans une partie enveloppe d'un corps d'emballage constitué d'un matériau composite,
**caractérisé en ce qu'**un anneau à induction (3) est prévu, que l'anneau à induction (3) entoure la partie enveloppe et est ajusté à la forme périphérique de la partie enveloppe, que l'anneau à induction (3) comprend au moins deux segments (4, 5, 6, 7) formant un anneau, que les segments (4, 5, 6, 7) peuvent être déplacés dans le plan de l'élément couvercle de manière telle que l'aire de section transversale entourée par les segments (4, 5, 6, 7) soit variable, qu'un premier joint (10) entre deux segments (4, 7) est formé de façon électriquement isolante, de façon qu'aucun contact électrique entre les segments juxtaposés (4, 7) ne soit établi au niveau du premier joint (10), et que les autres joints (11) sont formés de manière telle qu'indépendamment de la position relative des segments (4, 5, 6, 7) les uns par rapport aux autres, un contact électrique soit toujours établi entre les segments contigus (4, 5, 6, 7).

2. Dispositif selon la revendication 1, **caractérisé en ce que** l'anneau à induction (3) comprend quatre segments (4, 5, 6, 7) .

3. Dispositif selon la revendication 2, **caractérisé en ce que** deux segments (5, 7) peuvent être déplacés le long d'une première ligne (15) en direction de la partie enveloppe, et que deux segments (4, 6) peuvent être déplacés le long d'une deuxième ligne (16) en direction de la partie enveloppe.

4. Dispositif selon la revendication 3, **caractérisé en ce que** la première ligne (15) et la seconde ligne (16) forment entre elles un angle d'environ 90°.

5. Dispositif selon l'une des revendications 1 à 4,
**caractérisé en ce que** le dispositif comporte des éléments coulisseaux (13), et que les segments (4, 5, 6, 7) sont fixés sur les éléments coulisseaux (13).

6. Dispositif selon l'une des revendications 1 à 5,
**caractérisé en ce que** le dispositif comporte des pistons (17) qui sont guidés le long de lignes essentiellement s'étendant suivant des directions s'éloignant de la partie enveloppe.

7. Dispositif selon la revendication 6, **caractérisé en ce que** quatre pistons (17) sont prévus.

8. Dispositif selon la revendication 7, **caractérisé en ce que** les éléments coulisseaux (13) sont susceptibles d'être soumis à l'application d'une force fournie par les pistons (17), qui est dirigée en direction de la partie enveloppe.

9. Dispositif selon l'une des revendications 6 à 8,
**caractérisé en ce que** les pistons (17) sont susceptibles d'être soumis à une pression.

10. Dispositif selon la revendication 9, **caractérisé en ce que** les pistons (17) sont susceptibles d'être soumis à une pression par l'intermédiaire d'une conduite de pression commune (19B).

11. Dispositif selon l'une des revendications 5 à 10,
**caractérisé en ce que** les éléments coulisseaux (13) sont précontraints dans une direction s'éloignant de la partie enveloppe.

12. Dispositif selon l'une des revendications 5 à 11,
**caractérisé en ce que** les éléments coulisseaux (13) sont précontraints au moyen d'un ressort (25).

13. Dispositif selon l'une des revendications 5 à 12,
**caractérisé en ce que** le dispositif comprend des bras de levier (20) ayant une première extrémité (21) et une seconde extrémité (22), et que les premières extrémités (21) sont articulées sur les éléments coulisseaux (13), et les bras de levier (20) sont susceptibles de basculer autour d'axes de pivots (23) disposés entre les deux extrémités (20, 22).

14. Dispositif selon la revendication 13, **caractérisé en ce que** les bras de levier (20) sont articulés, par leur première extrémité (21), sur un élément coulisseau (13).

15. Dispositif selon la revendication 14, **caractérisé en ce que** les premières extrémités (21) des bras de levier (20) sont articulées sur l'élément coulisseau (13) par l'intermédiaire d'un axe commun (24).

16. Dispositif selon des revendications 13 à 15,
**caractérisé en ce que** les pistons (17) poussent sur les secondes extrémités (22) des bras de levier (20).

17. Dispositif selon la revendication 16, **caractérisé en ce qu'**un piston (17) pousse sur les secondes extrémités (22) de deux bras de levier (20), et que les deux bras de levier (20) sont articulés sur deux éléments coulisseaux (13).

18. Dispositif selon l'une des revendications 13 à 17,
**caractérisé en ce que** les secondes extrémités (22) des bras de levier (20) peuvent être soumises à une force appliquée par les pistons (17), force qui est essentiellement dirigée suivant une direction s'éloignant de la partie enveloppe.

19. Dispositif selon l'une des revendications 1 à 18,
**caractérisé en ce que** les segments (4, 7) contigus au premier joint (10) comportent respectivement un élément de contact (8).

20. Dispositif selon l'une des revendications 1 à 19,
**caractérisé en ce que** les segments (4, 7) contigus au premier joint (10) présentent un écartement l'un de l'autre, indépendamment de la position des segments (4, 5, 6, 7).

21. Dispositif selon l'une des revendications 1 à 20,
**caractérisé en ce que** les segments (4, 5, 6, 7) comprennent une pluralité de lamelles (26) empilées les unes sur les autres.

22. Dispositif selon la revendication 21, **caractérisé en ce qu'**au niveau des autres joints (11), les lamelles (26) comportent des surfaces de contact (28).

23. Dispositif selon la revendication 22, **caractérisé en ce que** les surfaces de contact (28) des lamelles (26) d'un segment (6, 7) contigu à un autre joint (11) sont en appui sur les surfaces de contact (28) des lamelles (26) de l'autre des segments (6, 7), qui est contigu à l'autre joint (11).

24. Dispositif selon la revendication 22 ou 23,
**caractérisé en ce que** les surfaces de contact (28) sont réalisées sous forme de languettes (27) saillant à l'extérieur, aménagées sur les lamelles (26).
